(19) Europäisches Patentamt
European Patent Office
Office européen des brevets

(11) EP 3 290 475 A1

(12) **EUROPÄISCHE PATENTANMELDUNG**

(43) Veröffentlichungstag:
**07.03.2018 Patentblatt 2018/10**

(51) Int Cl.:
***C08L 67/02*** *(2006.01)* ***C08K 5/3492*** *(2006.01)*
***C08K 5/5313*** *(2006.01)*

(21) Anmeldenummer: **16186756.9**

(22) Anmeldetag: **01.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH
50569 Köln (DE)**

(72) Erfinder:
- **ENDTNER, Jochen
50679 Köln (DE)**
- **BIENMÜLLER, Matthias
47803 Krefeld (DE)**

(54) **THERMOPLASTISCHE FORMMASSEN**

(57) Die Erfindung betrifft Zusammensetzungen sowie daraus herzustellende thermoplastische Formmassen und darauf wiederum basierende Erzeugnisse enthaltend neben Polyethylenterepthalat wenigstens einen weiteren Polyester aus der Gruppe der Polyalkylentherephthalate oder Polycycloalkylenterephthalate, ferner wenigstens ein organisches Phosphinsäuresalz und/oder wenigstens ein organisches Diphosphinsäuresalze, Melem und Melaminpolyphosphat.

EP 3 290 475 A1

## Beschreibung

Die Erfindung betrifft Zusammensetzungen sowie daraus herzustellende Formmassen und darauf wiederum basierende Erzeugnisse enthaltend neben Polyethylenterepthalat wenigstens einen weiteren Polyester aus der Gruppe der Polyalkylentherephthalate oder Polycycloalkylenterephthalate, sowie wenigstens ein organisches Phosphinsäuresalz und/oder wenigstens ein organisches Diphosphinsäuresalz, sowie wenigstens ein kondensiertes Melamin-Derivat und wenigstens ein Umsetzungsprodukt aus einem Melaminderivat mit Phosphorsäuren oder kondensierten Phosphorsäuren.

## Stand der Technik

Nicht zuletzt aufgrund ihrer guten elektrischen Kennwerte z. B. hinsichtlich Durchschlagfestigkeit und spezifischem Durchgangswiderstand sind Polyester beliebte Materialien in Elektronik- und Elektroanwendungen. Aufgrund der Gefahr von Brandentstehung in der Nähe von stromführenden Teilen werden dabei häufig flammwidrig ausgestattete Materialien eingesetzt. Je nach Anwendungsgebiet sind dabei nicht nur eine gute Selbstverlöschung, z. B. eine UL94 V-0 Klassifizierung (Underwriters Laboratories Inc. Standard of Safety, "Test for Flammability of Plastic Materials for Parts in Devices and Appliances", S. 14 bis S. 18 Northbrook 1998), sondern auch eine geringe Entzündlichkeit gefragt. So wird beispielsweise in der IEC60335-1 für Komponenten in unbeaufsichtigten Haushaltsgeräten, die sich innerhalb von 3mm Abstand zu stromführenden Teilen mit Strömen >0,2A befinden, eine Glühdrahtprüfung nach IEC60695-2-11 am Fertigteil vorgeschrieben, wobei es bei einer Glühdrahttemperatur von 750°C keine Flammerscheinung von mehr als 2 Sekunden geben darf. Die Erfahrung zeigt, dass Prüfergebnisse am Fertigteil aufgrund der undefinierten Geometrie von Fertigteilen oder auch den Wärmefluss beeinträchtigende Metallkontakte nicht direkt mit Prüfergebnissen übereinstimmen, die gemäß IEC60695-2-13 an einer definierten Rundplatte bei gleicher Glühdrahttemperatur durchgeführt wurden, zumal nach IEC60695-2-13 ein Probekörper auch dann noch als nicht entzündet betrachtet wird, wenn er eine Flammerscheinung kleiner als 5 Sekunden zeigt.

Um sichergehen zu können, dass ein Material auch am Fertigteil und unabhängig von der Geometrie auch bei 750°C Glühdrahttemperatur keine Flamme mit einer Brennzeit länger als 2 Sekunden zeigt, besteht zunehmend der Wunsch nach Materialien, die bei einer Plattenprüfung nach IEC60695-2-13 einen größeren Sicherheitspuffer aufweisen, d. h. dass über die Normanforderungen hinaus, auch bei deutlich höheren Glühdrahttemperaturen als 750°C, noch keine Entflammung stattfindet, wobei "keine Entflammung" dabei nicht gemäß IEC60695-2-13 als Flammerscheinung <5 Sekunden, sondern im wörtlichen Sinn als gar keine Flamme, d. h. als Brennzeit von 0 Sekunden interpretiert wird. Um dabei die variablen Dicken der Fertigteile zu berücksichtigen, soll dies in gleicher Weise sowohl an Prüfplatten mit mindestens 3mm Wandstärke, als auch an dünnen Prüfplatten mit maximal 0,75mm Wandstärke erfüllt werden.

Dabei werden in jüngster Zeit nicht zuletzt aus ökologischen Gründen zunehmend halogenfreie Lösungen eingefordert.

Aufgrund des häufig komplexen Aufbaus von Kunststoff basierten Erzeugnissen, gerade auch im Bereich der Haushaltsgeräte, besteht ferner auch der Wunsch nach Materialien mit vergleichsweise geringer Schwindung, was insgesamt auch den Verzug reduziert und damit die Konstruktion und Werkzeugauslegung erleichtert.

Bekannt ist aus technischen Datenblättern, dass Mischungen aus Polybutylenterephthalat (PBT) und Polyethylenterephthalat (PET) bei gleichem Gehalt an Füll- oder Verstärkungsstoffen eine geringere Verarbeitungsschwindung aufweisen, als ein entsprechendes PBT ohne PET-Anteil. Problematisch bei PBT+PET-Blends ist allerdings das Risiko der Umesterung bei Temperaturen oberhalb des Schmelzpunktes, was zu unerwünschten Nebeneffekten wie zum Beispiel einer verlangsamten Kristallisation führen kann **[**Handbook of Thermoplastics, 2nd revised ed. 2015, Olagoke Olabisi (Hrsg.), Kolapo Adewale (Hrsg.), CRC Press Inc. USA, S. 331**].** Dabei ist allerdings nicht bekannt, inwieweit sich spezielle Additive zur Verbesserung der Performance im Glühdrahtentzündlichkeitstest nach IEC60695-2-13 negativ auf die Umesterung auswirken könnten.

In EP 2 927 279 A1 sind Zusammensetzungen enthaltend PBT, Phosphinsäuresalze, >4 Gew.-% einer Phosphazenverbindung und stickstoffhaltige zyklische Verbindungen beschrieben, die nach IEC60695-2-13 an Platten unterschiedlicher Dicke einen GWIT von mindestens 775°C erreichen. Dort findet sich auch ein Hinweis, dass bei Verwendung von PBT+PET Blends der Verzug verringert werden konnte, allerdings mit der Einschränkung, dass sich die Kristallisationszeit verlängert, was den Nachteil verlängerter Zykluszeit beinhaltete, so dass EP 2 927 279 A1 Zusammensetzungen mit PBT als alleinigem Harz favorisiert.

In EP 1 945 708 B1 werden Zusammensetzungen enthaltend PBT, PET, ein unterhalb von 310°C aufschmelzendes Metallphosphinat und Melaminpolyphosphat beschrieben, die bei einer Plattendicke von 1,5mm im Glühdrahttest nach IEC60695-2-13 mindestens einen GWIT von 775°C erzielen, ohne dass auf die Problematik der Umesterung von PBT und PET oder auf die Glühdrahtperformance bei dünneren Wandstärken als 1,5mm eingegangen wird. Auch zeigen die Beispiele der EP 1 945 708 B1 im UL94 Test bei Wandstärken von 0,75 mm vereinzelt nur eine V-2 Klassifizierung.

Aufgabe der vorliegenden Erfindung war es daher, Zusammensetzungen sowie daraus herzustellende Formmassen bzw. Erzeugnisse auf Basis von Blends aus Polyethylenterepthalat und wenigstens einem weiteren Polyalkylenterephthalat und/oder Polycycloalkylenterephthalat bereit zu stellen, die weitgehend thermisch stabil gegen Umesterung sind, im UL94-Test bei Wandstärken ≥ 0,75mm eine V-0 Klassifizierung aufweisen und im Glühdrahttest nach IEC60695-2-13 auch bei einer Glühdrahttemperatur von mindestens 800°C bei Wandstärken ≥ 0,75mm keine Entzündung zeigen.

Keine Entzündung im Glühdrahttest soll dabei so verstanden werden, dass es keine Flamme gibt, die Brennzeit der Flamme also 0 Sekunden ist.

Stabil gegen Umesterung bedeutet erfindungsgemäß, dass der Schmelzpunkt der höchstschmelzenden Blendkomponente, gemessen als endothermer Peak mit der unten näher beschriebenen DSC-Methode, (Dynamische Differenzkalorimetrie [https://de.wikipedia.org/wiki/Dynamische_Differenzkalorimetrie]) bei der 2. Aufheizung maximal 10°C unterhalb des Schmelzpunktes bei der der 1. Aufheizung liegt. Dabei wird ein DSC-Gerät des Typs Mettler DSC 822e der Fa. Mettler Toledo, Greifensee, Schweiz mit 10 (±2)mg eines zu untersuchenden Compounds bestückt und dann unter Stickstoff zunächst mit 20K/min von 0°C auf 280°C erhitzt ["1. Aufheizung"], anschließend mit - 10K/min wieder von 280°C auf 0°C abgekühlt und schließlich wieder mit 20K/min von 0°C auf 280°C erhitzt ["2.Aufheizung"]. Die Probe wird dabei über einen längeren Zeitraum hohen Temperaturen ausgesetzt, die bei instabilen Compounds zu Nebenreaktionen, im Falle von Polyalkylenterephthalat-Blends insbesondere zu Umesterungen führt. Die Verschiebung der Schmelzpeaks zwischen 1. Aufheizung und 2. Aufheizung hin zu kleineren Temperaturen kann daher als Maß für den Grad der Umesterung und damit als Maß für die thermische Stabilität einer Probe betrachtet werden, wobei eine Verschiebung kleiner oder gleich 10°C erfindungsgemäß als geringe Neigung zur Umesterung repräsentiert, während eine Verschiebung um mehr 10°C für ein hohes Maß an Umesterung und damit für eine geringe thermische Stabilität steht.

## Erfindung

Lösung der Aufgabe und Gegenstand der Erfindung sind Zusammensetzungen, sowie daraus herzustellende Formmassen und Erzeugnisse, enthaltend

A) wenigstens ein Polyalkylenterephthalat verschieden von Polyethylenterephthalat, oder Polycycloalkylenterephthalat,

B) Polyethylenterephthalat,

C) wenigstens ein organisches Phosphinsäuresalz der Formel (I) und/oder wenigstens ein organisches Diphosphinsäuresalz der Formel (II) und/oder deren Polymere,

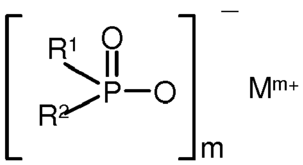 (I) 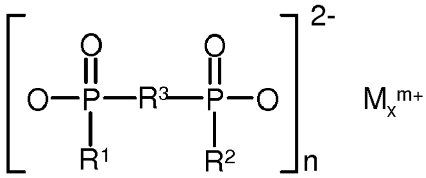 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl im Bereich von 1 bis 4 steht;

n für eine ganze Zahl im Bereich von 1 bis 3 steht, und

x für 1 und 2 steht,

wobei n, x und m in Formel (II) gleichzeitig nur solche ganzen Zahlen annehmen können, dass das Diphosphinsäuresalz der Formel (II) als Ganzes ungeladen ist,

D) wenigstens ein kondensiertes Melamin-Derivat und

E) wenigstens ein von Komponente D) verschiedenes Umsetzungsprodukt aus einem Melaminderivat mit Phosphorsäuren oder kondensierten Phosphorsäuren.

Überraschenderweise zeigen auf den erfindungsgemäßen Zusammensetzungen basierende Erzeugnisse gegenüber dem Stand der Technik sehr hohe Glühdrahtentzündlichkeitswerte und Flammwidrigkeiten sowie - trotz Verwendung von mindestens zwei unterschiedlichen Polyesterkomponenten - nur eine geringe Neigung zur Umesterung. Bei Verwendung einer Kombination von Komponente D) und Komponente E) können somit in durch Komponente C) flammgeschützten Polyestergemischen aus Komponente A) und B) sowohl hohe GWIT Werte, als auch gleichzeitig hohe thermische Stabilität bezüglich Umesterung erzielt werden. Fehlt mindestens eine der beiden Komponenten D) und / oder E), so erhält man verstärkte Umesterung der Komponenten A) und B) miteinander, was im Beispielteil durch entsprechende Versuche belegt wird.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind. Angegebene Normen gelten in der zum Anmeldetag gültigen Fassung, sofern nicht anders angegeben.

"Alkyl" bezeichnet im Rahmen der vorliegenden Erfindung eine geradkettige oder verzweigte gesättigte Kohlenwasserstoffgruppe. In einigen Ausführungsformen wird eine Alkylgruppe mit 1 bis 6 Kohlenstoffatomen eingesetzt. Diese kann als eine "Niederalkylgruppe" bezeichnet werden. Bevorzugte Alkylgruppen sind Methyl (Me), Ethyl (Et), Propyl, insbesondere n-Propyl und iso-Propyl, Butyl, insbesondere n-Butyl, iso-Butyl, sec-Butyl, tert-Butyl, Pentyl-Gruppen, insbesondere n-Pentyl, iso-Pentyl, neo-Pentyl, Hexylgruppen und dergleichen. Entsprechendes gilt für den Begriff Polyalkylen.

"Aryl" bezeichnet im Rahmen der vorliegenden Erfindung ein monocyclisches aromatisches Kohlenwasserstoff-Ringsystem oder ein polycyclisches Ringsystem, in dem zwei oder mehrere aromatische Kohlenwasserstoff-Ringe kondensiert sind, oder wenigstens einen aromatischen monocyclischen Kohlenwasserstoffring, der mit einem oder mehreren Cycloalkyl- und/oder Cycloheteroalkylringen fusioniert ist. In erfindungsgemäßen Ausführungsformen ist Aryl oder Arylen eine Arylgruppe mit 6 bis 14 Kohlenstoffatomen. Bevorzugte Arylgruppen mit einem aromatischen carbocyclischen Ringsystem sind Phenyl, 1-Naphthyl (bicyclisch), 2-Naphthyl (bicyclisch), Anthracenyl (tricyclisch), Phenanthrenyl (tricyclisch), Pentacenyl (fünfcyclisch) und ähnliche Gruppen. Andere bevorzugte Arylgruppen sind Benzodioxanyl, Benzodioxolyl, Chromanyl, Indolinyl-Gruppen und dergleichen. In einigen Ausführungsformen können Arylgruppen, wie hierin beschrieben, substituiert sein. In einigen Ausführungsformen kann eine Arylgruppe einen oder mehrere Substituenten aufweisen.

"Alkylaryl" im Sinne der vorliegenden Erfindung bedeutet eine Alkyl-Aryl-Gruppe, wobei die Alkylaryl-Gruppe kovalent an die definierte chemische Struktur durch die Alkylgruppe gebunden ist. Eine erfindungsgemäß bevorzugte Alkylarylgruppe ist die Benzyl-Gruppe ($-CH_2-C_6H_5$). Alkylarylgruppen gemäß der vorliegenden Erfindung können wahlweise substituiert sein, das heißt, entweder die Arylgruppe und/oder die Alkyl-Gruppe kann substituiert sein. Im Gegensatz dazu bedeutet "Arylalkyl" im Sinne der vorliegenden Erfindung eine Aryl-Alkyl-Gruppe, wobei die Arylalkyl-Gruppe kovalent an die definierte chemische Struktur durch die Arylgruppe gebunden ist.

Vorzugsweise betrifft die Erfindung Zusammensetzungen, sowie daraus herzustellende Formmassen und Erzeugnisse, enthaltend bezogen auf 100 Massenanteile der Komponente A)

25 bis 120 Massenanteile der Komponente B),

20 bis 80 Massenanteile der Komponente C),

2 bis 40 Massenanteile der Komponente D) und

2 - 30 Massenanteile der Komponente E).

Die Zubereitung der erfindungsgemäßen Zusammensetzungen für eine weitere Nutzung erfolgt durch Mischen der als Edukte einzusetzenden Komponenten A) bis E) in wenigstens einem Mischwerkzeug, vorzugsweise einem Compounder. Hierdurch werden als Zwischenprodukte auf den erfindungsgemäßen Zusammensetzungen basierende Formmassen erhalten. Die Zusammensetzungen, aber auch die daraus herzustellenden Formmassen und Erzeugnisse, können entweder ausschließlich aus den Komponenten A) bis E) bestehen, oder aber zusätzlich zu den Komponenten A) bis E) noch weitere Komponenten enthalten, vorzugsweise wenigstens eine der im Weiteren aufgeführten Komponenten F) bis K).

In einer Ausführungsform enthalten die erfindungsgemäßen Zusammensetzungen, sowie daraus herzustellende Formmassen und Erzeugnisse, zusätzlich zu den Komponenten A) bis E) noch **F**) wenigstens ein **weiteres Flammschutzmittel,** verschieden von den Komponenten C), D) und E), vorzugsweise in Mengen im Bereich von 2 bis 50 Massenanteilen, bezogen auf 100 Massenanteile der Komponente A).

In einer Ausführungsform enthalten die erfindungsgemäßen Zusammensetzungen sowie daraus herzustellende Formmassen und Erzeugnisse, zusätzlich zu den Komponenten A) bis F) oder anstelle von F) noch **G**) wenigstens ein **Metallsulfat,** vorzugsweise in Mengen im Bereich von 1 bis 40 Massenanteilen, bezogen auf 100 Massenanteile der Komponente A).

In einer Ausführungsform enthalten die erfindungsgemäßen Zusammensetzungen, sowie daraus herzustellende Formmassen und Erzeugnisse, zusätzlich zu den Komponenten A) bis G) oder anstelle von F) und/oder G) noch **H)** wenigstens einen von den Komponenten A) bis G) verschiedenen **Füllstoff oder Verstärkungsstoff,** vorzugsweise in Mengen im Bereich von 0,1 bis 300 Massenanteilen, bezogen auf 100 Massenanteile der Komponente A).

In einer Ausführungsform enthalten die erfindungsgemäßen Zusammensetzungen, sowie daraus herzustellende Formmassen und Erzeugnisse, zusätzlich zu den Komponenten A) bis H) oder anstelle F) und/oder G) und/oder H) noch **K)** wenigstens ein weiteres von den Komponenten C) bis H) verschiedenes **Additiv,** vorzugsweise in Mengen im Bereich von 0,01 bis 80 Massenanteilen, bezogen auf 100 Massenanteile der Komponente A).

Erfindungsgemäß können die Komponenten F), G), H) und K) in den Zusammensetzungen, Formmassen und Erzeugnissen vorhanden sein, sie können aber auch nicht vorhanden sein. Vorzugsweise ergeben sich für die Zusammensetzungen, Formmassen und Erzeugnisse folgende Kombinationen der Komponenten:

A), B), C), D), E);

A), B), C), D), E), F);

A), B), C), D), E), G);

A), B), C), D), E), H);

A), B), C), D), E), K);

A), B), C), D), E), F), G);

A), B), C), D), E), F), H);

A), B), C), D), E), F), K);

A), B), C), D), E), F), G), H);

A), B), C), D), E), F), G), K);

A), B), C), D), E), F), G), H), K).

Die erfindungsgemäßen Zusammensetzungen, die in der Kunststofftechnik zusammenfassend auch als Formmassen bezeichnet werden, fallen bei der Bearbeitung der Komponenten A) bis E) sowie ggf. zusätzlich noch wenigstens eine der Komponenten F), G), H) oder K) vorzugsweise als Granulat, in Strangform oder als Pulver an. Die Zubereitung erfolgt durch Mischen der erfindungsgemäßen Zusammensetzungen in wenigstens einem Mischwerkzeug, vorzugsweise einem Compounder, besonders bevorzugt einem gleichsinnig drehenden Zweiwellenextruder. Der Mischvorgang der Komponenten A) bis E), sowie gegebenenfalls wenigstens einer weiteren Komponente F) und / oder G) und / oder H) und / oder K) zur Herstellung erfindungsgemäßer Zusammensetzungen in Form von Pulvern, Granulaten oder in Strangform wird in der Kunststofftechnik auch als Compoundierung bezeichnet. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten A) bis E) bestehen, oder aber zusätzlich zu den Komponenten A) bis E) noch weitere Komponenten enthalten, vorzugsweise wenigstens eine der Komponenten F) und / oder G) und / oder H) und/ oder K). In einem weiteren Schritt werden die erfindungsgemäßen Formmassen dann als Matrixmaterial einem Spritzguss oder einer Extrusion, bevorzugt einem Spritzguss, unterzogen, um daraus erfindungsgemäße Erzeugnisse herzustellen. Erfindungsgemäße Erzeugnisse enthalten deshalb dieselben Komponenten A) bis E) sowie ggf. zusätzlich noch wenigstens eine der Komponenten F), G), H) oder K).

**Komponente A)**

Die erfindungsgemäß als Komponente A) einzusetzenden, von Polyethylenterephthalat verschiedenen Polyalkylenterephthalate oder Polycycloalkylenterephthalate können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern, vorzugsweise Elastomeren, oder auch Verstärkungsmaterialien, vorzugsweise mineralischen Füllstoffen oder Glasfasern, und gegebenenfalls weiteren Additiven, zu Werkstoffen mit speziell eingestellten Eigenschaftskombinationen ausgerüstet werden. Geeignet sind auch Blends mit Anteilen von anderen Polymeren, wobei gegebenenfalls ein oder mehrere Kompatibilisatoren eingesetzt werden können. Die Eigenschaften der Polymere können nach Bedarf durch Zusatz von Elastomeren verbessert werden.

Bevorzugt als Komponente A) einzusetzende Polyalkylenterephthalate oder Polycycloalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen **(**Kunststoff-Handbuch, Bd. VIII**, S. 695**

**ff, Karl Hanser Verlag, München 1973).**

Bevorzugt als Komponente A) einzusetzende Polyalkylenterephthalate oder Polycycloalkylenterephthalate enthalten mindestens 80 Mol-%, vorzugsweise mindestens 90 Mol-%, bezogen auf die Dicarbonsäure, Terephthalsäurereste und mindestens 80 Mol%, vorzugsweise mindestens 90 Mol-%, bezogen auf die Diolkomponente, 1,4-Cyclohexandimethanol- und/oder Propandiol-1,3- (im Falle von Polypropylenterephthalat) und/oder Butandiol-1,4-reste.

Bevorzugt als Komponente A) einzusetzende Polyalkylenterephthalate oder Polycycloalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Bevorzugt als Komponente A) einzusetzende Polyalkylenterephthalate oder Polycycloalkylenterephthalate können neben 1,4-Cyclohexandimethanol bzw. 1,3-Propandiol bzw. 1,4-Butandiol-1,4 bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, l,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxy-phenyl)-propan.

Besonders bevorzugt als Komponente A) einzusetzende Polyalkylenterephthalate oder Polycycloalkylenterephthalate sind solche, die allein aus Terephthalsäure und deren reaktionsfähigen Derivaten, insbesondere deren Dialkylestern, und 1,4-Cyclohexandimethanol und/oder 1,3-Propandiol und/oder 1,4-Butandiol hergestellt werden, insbesondere bevorzugt Poly-1,4-cyclohexandimethanolterephthalat, Polyethylenterephthalat und Polybutylenterephthalat und Mischungen derselben.

Bevorzugt als Komponente A) einzusetzende Polyalkylenterephthalate oder Polycycloalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Die als Komponente A) einzusetzenden Polyalkylenterephthalate oder Polycycloalkylenterephthalate besitzen im allgemeinen eine intrinsische Viskosität im Bereich von 30 bis 150cm$^3$/g, vorzugsweise im Bereich von 40 bis 130cm$^3$/g, besonders bevorzugt im Bereich von 50 bis 100cm$^3$/g jeweils gemessen in Phenol/o-Dichlorbenzol (1:1 Gew.-Teile) bei 25°C. Die intrinsische Viskosität IV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (Ameisensäure, m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, im Rahmen der vorliegenden Erfindung gemäß DIN ISO 1628-5 für Polyester. Siehe hierzu auch: http://de.wikipedia.org/wiki/Viskosimetrie und "http://de.wikipedia.org/wiki/Mark-Houwink-Gleichung".

Die erfindungsgemäß als Komponente A) einzusetzenden Polyalkylenterephthalate oder Polycycloalkylenterephthalate können auch im Gemisch mit anderen Polyestern und/oder weiteren Polymeren eingesetzt werden.

Den als Komponente A) einzusetzenden Polyalkylenterephthalaten oder Polycycloalkylenterephthalaten können während der Compoundierung übliche Additive, insbesondere Entformungsmittel, in der Schmelze zugemischt werden.

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau.

Als Komponente A) wird bevorzugt Polybutylenterephthalat (PBT) [CAS Nr. 24968-12-5] eingesetzt, das unter der Marke Pocan® bei der Lanxess Deutschland GmbH, Köln, erhältlich ist.

Alternativ wird als Komponente A) bevorzugt Poly-1,4-cyclohexandimethanolterephthalat [CAS Nr.25037-99-4] als Polycycloalkylenterephthalat eingesetzt.

**Komponente B)**

Das erfindungsgemäß als Komponente B) einzusetzende Polyetylenerephthalat (PET) [CAS Nr. 25038-59-9] kann nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z. B. Elastomeren) oder auch Verstärkungsmaterialien (wie z. B. mineralischen Füllstoffen oder Glasfasern) und gegebenenfalls weiteren Additiven, zu Werkstoffen mit speziell eingestellten Eigenschaftskombinationen ausgerüstet werden.

Bevorzugt als Komponente B) einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Komponente B) einzusetzendes PET kann neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, wobei Isophthalsäure bevorzugt ist. Besonders bevorzugt ist ein Isophthalsäure-Gehalt im Bereich von 0,1 bis 10 Mol-%, ganz besonders bevorzugt im Bereich von 0,5 - 5 Mol-%.

Bevorzugt als Komponente B) einzusetzendes PET kann neben Ethylenglykol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, I,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan.

Besonders bevorzugt wird PET eingesetzt, das allein aus Terephthalsäure und deren reaktionsfähigen Derivaten, insbesondere deren Dialkylestern und Ethylenglykol hergestellt wird.

Erfindungsgemäß als Komponente B) einzusetzendes PET besitzt im allgemeinen eine intrinsische Viskosität im Bereich von 30 bis 150 $cm^3/g$, vorzugsweise im Bereich von 40 bis 130 $cm^3/g$, besonders bevorzugt im Bereich von 50 bis 100 $cm^3/g$ jeweils gemessen in Phenol/o-Dichlorbenzol (1:1 Gew.-Teile) bei 25°C. Beim erfindungsgemäß einzusetzenden PET kann es sich auch um Rezyklat handeln.

Unter Rezyklaten versteht man im Allgemeinen:

1) sogenanntes Post Industrial Rezyklat (auch Pre Consumer Rezyklat genannt): hierbei handelt es sich um Produktionsabfälle bei der Polykondensation, bei der Compoundierung (z. B. offspec-Ware) oder bei der Verarbeitung z. B. Angüsse bei der Spritzguss¬verarbeitung, Anfahrware bei der Spritzgussverarbeitung oder Extrusion oder Rand¬Abschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET-Flaschen für Mineralwasser, Softdrinks und Säfte.

Erfindungsgemäß bevorzugt als Komponente B) einzusetzende PET-Rezyklate aus zu recyclierten PET-Flaschen werden bevorzugt nach einem Verfahren gemäß DE 103 24 098 A1, WO 2004/009315 A1 oder nach WO

2007/116022 A2 erhalten.

Dem als Komponente B) einzusetzenden PET können während der Compoundierung übliche Additive, insbesondere Entformungsmittel, in der Schmelze zugemischt werden. Als Komponente B) wird besonders bevorzugt ein PET mit 0,5 - 5 Mol-% [bezogen auf 100 Mol-% Disäure] Isophthalsäure eingesetzt.

**Komponente C)**

Die als Komponente C) erfindungsgemäß einzusetzenden organischen Phosphinsäuresalze der oben angegebenen Formel (I) und/oder organischen Diphosphinsäuresalze der oben angegebenen Formel (II) und/oder deren Polymere werden im Rahmen der vorliegenden Erfindung auch als Phosphinate bezeichnet.

Bevorzugt steht M in den Formeln (I) oder (II) für Aluminium. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, N-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 und 3, besonders bevorzugt für 3.

Bevorzugt steht n in Formel (II) für 1 und 3, besonders bevorzugt für 3.

Bevorzugt steht x in Formel (II) für 1 und 2, besonders bevorzugt für 2.

Ganz besonders bevorzugt handelt es sich bei Komponente C) um ein nicht aufschmelzbares Metallphosphinat, d. h. dass sich das Metallphosphinat vor Erreichen des Schmelzpunktes zersetzt.

Insbesondere bevorzugt wird als Komponente C) Aluminium-tris(diethylphosphinat) [CAS Nr. 225789-38-8] eingesetzt, das z. B. von der Fa. Clariant International Ltd. Muttenz, Schweiz unter dem Handelsnamen Exolit® OP1230 oder Exolit® OP1240 angeboten wird.

**Komponente D)**

Als Komponente D) wird erfindungsgemäß mindestens ein kondensiertes Melaminderivat eingesetzt. Bevorzugte Kondensationsprodukte des Melamins sind Melam [CAS Nr. 3576-88-3], Melem [CAS Nr. 1502-47-2] oder Melon [CAS Nr. 32518-77-7], sowie Mischungen daraus.

Die Herstellung gelingt gemäß https://de.wikipedia.org/wiki/Melem_(Verbindung) beispielsweise durch Kondensation von Cyanamid, Ammoniumdicyanamid, Dicyandiamid oder Melamin, wobei die Synthese über mehrere Stufen verläuft. Zunächst wird aus Cyanamid oder Ammoniumdicyanamid Dicyandiamid gebildet, welches dann zum Melamin cyclisiert. Eine Kondensation von Melamin führt unter Ammoniakabgabe direkt oder über die Zwischenverbindung Melam zur Zielverbindung.

Erfindungsgemäß besonders bevorzugt wird als Komponente D) Melem eingesetzt, wobei Melem-Qualitäten mit einem Melamin-Gehalt kleiner als 1,0 Gew.-% ganz besonders bevorzugt sind und der Gehalt an Melamin über NIR-FT-IR bestimmt wird.

Erfindungsgemäß einzusetzendes Melem wird beispielsweise als Delacal® NFR von der Fa. Delamin Ltd., Derby, UK angeboten.

**Komponente E)**

Als erfindungsgemäß einzusetzende Komponente E) enthalten die Zusammensetzungen und daraus herzustellende Formassen bzw. Erzeugnisse wenigstens ein von Komponente D) verschiedenes Umsetzungsprodukt aus einem Melaminderivat mit Phosphorsäuren oder kondensierten Phosphorsäuren sowie deren Gemische.

Bevorzugt in der Komponente E) einzusetzende Melaminderivate sind hierbei Melamin, Kondensationsprodukte des Melamins, insbesondere Melem, Melam oder Melon, sowie Derivate dieser Verbindungen, insbesondere deren am Stickstoff substituierte Spezies.

Als in der Komponente E) einzusetzende Phosphorsäuren bzw. kondensierte Phosphorsäuren im Sinne der Erfindung gelten insbesondere Phosphorsäure, Diphosphorsäure, Meta- und Polyphosphorsäure.

Bevorzugte als Komponente E) einzusetzende Umsetzungsprodukte von Melaminderivaten mit Phosphorsäuren oder kondensierten Phosphorsäuren sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat, wie sie z. B. in der WO-A 98/39306 beschrieben sind. Ganz besonders bevorzugt handelt es sich bei der Komponente E) um Melaminpolyphosphat. Melaminpolyphosphat ist in diversen Produktqualitäten kommerziell verfügbar. Beispiele hierfür sind u.a. Melapur® 200/70 (Fa. BASF, Ludwigshafen, Deutschland) sowie Budit® 3141 (Fa. Budenheim, Budenheim, Deutschland).

**Komponente F)**

Die in einer bevorzugten Ausführungsform der erfindungsgemäßen Zusammensetzungen und daraus herzustellenden Formassen bzw. Erzeugnissen als Komponente F) einzusetzenden weiteren Flammschutzmittel sind bevorzugt halogenfrei.

Vorzugsweise werden als Komponente F) stickstoffhaltige Flammschutzmittel eingesetzt. Unter den als Komponente F) einzusetzenden stickstoffhaltigen Flammschutzmitteln verschieden von Komponente D) und E) werden bevorzugt Umsetzungsprodukte des Melamins mit Säuren eingesetzt, wobei Melamincyanurat und/oder Melamin-interkalierte Aluminium-, Zink- oder Magnesium-Salze von kondensierten Phosphaten, wie in WO2012/025362 A1 beschrieben, ganz besonders bevorzugt sind. Insbesondere bevorzugt sind Melamincyanurat, Bis-Melamin-zinko-diphosphat (EP 2 609 173 A1) und/oder Bis-Melamin-alumotriphosphat (EP 2 609 173 A1), wobei Melamincyanurat insbesondere besonders bevorzugt ist. Ein Beispiel hierfür ist u.a. Melapur® MC25 der Fa. BASF, Ludwigshafen, Deutschland. Weitere als Komponente F) einzusetzende und bevorzugte stickstoffhaltige Flammschutzmittel verschieden von den Komponenten D) und E) sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz.

Vorzugsweise werden als Komponente F) auch phosphorhaltige Flammschutzmittel eingesetzt. Unter den als Komponente F) einzusetzenden phosphorhaltigen Flammschutzmitteln verschieden von den Komponente C) und E) werden bevorzugt phosphorhaltige Verbindungen aus der Gruppe der anorganischen Metallphosphinate, insbesondere Aluminiumphosphinat und Zinkphosphinat, der mono- und oligomeren Phosphor- und Phosphonsäureester, insbesondere Triphenylphosphat (TPP), Resorcinol-bis-(diphenylphosphat) (RDP), Bisphenol-A-bis-diphenylphosphat (BDP) einschließlich Oligomere, Polyphosphonate, insbesondere Bisphenol A-diphenyl methylphosphonate copolymere wie z. B. Nofia™ HM1100 [CAS-Nr. 68664-06-2] der Fa. FRX Polymers, Chelmsford, USA), ferner Derivate der 9,10-Dihydro-9-oxa-10-phosphaphenanthren-10-oxide (DOPO-Derivate)], Phosphonatamine, Metallphosphonate, insbesondere Aluminiumphosphonat und Zinkphosphonat, Phosphinoxide und Phosphazene eingesetzt.

Besonders bevorzugt sind dabei Phenoxyphosphazenoligomere. Die Phosphazene und deren Herstellung sind z. B. in EP-A 728 811, DE-A 1961668 und WO-A 97/40092 beschrieben. Insbesondere ganz besonders bevorzugt werden als Komponente F) ringförmige Phenoxyphosphazene wie 2,2,4,4,6,6-Hexahydro-2,2,4,4,6,6-hexaphenoxytriazatriphosphorine [CAS Nr. 1184-10-7] und/oder solche, wie sie z. B. von der Fa. Fushimi Pharmaceutical Co. Ltd, Kagawa, Japan unter der Bezeichnung Rabitle® FP110 [CAS-Nr. 1203646-63-2] erhältlich sind, eingesetzt.

Auch andere hier nicht speziell erwähnte Flammschutzmittel oder Flammschutzmittelsynergisten können als Komponente F) zum Einsatz kommen. Hierzu zählen auch rein anorganische Phosphorverbindungen verschieden von Komponente E), insbesondere roter Phosphor oder Borphosphathydrat. Ferner können auch mineralische Flammschutzadditive oder Salze aliphatischer und aromatischer Sulfonsäuren, insbesondere Metallsalze der 1-Perfluorbutansulfonsäure eingesetzt werden. Infrage kommen ferner Flammschutzmittelsynergisten aus der Gruppe der sauerstoff-, stickstoff- oder schwefelhaltigen Metallverbindungen verschieden von Komponente G), worin Metall für Zink, Molybdän, Calcium, Titan, Magnesium oder Bor steht, bevorzugt Zinkoxid, Zinkborat, Zinkstannat, Zinkhydroxystannat, Zinksulfid, Molybdänoxid, Magnesiumcarbonat, Calciumcarbonat, Calciumoxid, Titannitrid, Bornitrid, Magnesiumnitrid, Zinknitrid, Calciumborat, Magnesiumborat oder deren Mischungen.

Weitere bevorzugt als Komponente F) einzusetzende und geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone.

Die als Komponente F) einzusetzenden Flammschutzmittel können in Reinform, sowie über Masterbatche oder Kompaktate der Komponente A) und/oder der Komponente B) zugesetzt werden.

**Komponente G)**

Als Komponente G) wird wenigstens ein Metallsulfat eingesetzt, wobei das Metall aus Magnesium, Calcium, Barium und Zink ausgewählt wird. Bevorzugt wird Magnesium oder Barium eingesetzt, besonders bevorzugt Barium.

Bariumsulfat [CAS Nr. 7727-43-7] kann in Form des natürlich vorkommenden Baryts oder in Form von nach bekannten technischen Verfahren synthetisch hergestelltem Bariumsulfat eingesetzt werden. Als übliche Herstellmethoden für Bariumsulfat wird in http://de.wikipedia.org/wiki/Bariumsulfat beispielsweise die Fällung von Bariumsulfid oder

Bariumchlorid mit Natriumsulfat gelehrt. Die mittlere Teilchengröße [d50-Wert] ist dabei bevorzugt im Bereich von 0,1 bis 50μm, besonders bevorzugt im Bereich von 0,5 bis 10 μm und ganz besonders bevorzugt im Bereich von 0,6 bis 2μm. Das Bariumsulfat kann dabei unbehandelt oder mit anorganischen und/oder organischen Oberflächenbehandlungen ausgerüstet sein. Beispiele für anorganische oder organischen Oberflächenbehandlungen sowie Verfahren für deren Applikation auf die Oberfläche werden beispielsweise in WO2008/023074 A1 gelehrt. Geeignete synthetische Bariumsulfate werden z. B. von der Fa. Sachtleben Chemie GmbH, Duisburg, Deutschland unter den Handelsnamen Blanc fixe F und Blanc Fixe Super F angeboten. Die zugrunde liegende Norm ist ISO 13317-3.

Des weiteren geeignete Bariumsulfatqualitäten sind z. B. Albasoft® 90 und/oder Albasoft® 100 der Firma Deutsche Baryt Industrie Dr. Rudolf Alberti GmbH&Co. KG, Bad Lauterberg im Harz, Deutschland.

**Komponente H)**

Als Komponente H) können die Zusammensetzungen sowie daraus herzustellende Formmassen und Erzeugnisse wenigstens einen Füll- oder Verstärkungsstoff enthalten. Bevorzugt wird aber auch eine Mischung aus zwei oder mehreren unterschiedlichen Füll-und/oder Verstärkungsstoffen.

Vorzugsweise wird wenigstens ein Füll- und/oder Verstärkungsstoff aus der Gruppe Glimmer, Silikat, Quarz, insbesondere Quarzmehl, Titandioxid, Wollastonit, Nephelinsyenit, Kaolin, amorphe Kieselsäuren, Magnesiumcarbonat, Kreide, Feldspat, Glasfasern, Glaskugeln, Glasmehl und/oder faserförmige Füllstoffe und/oder Verstärkungsstoffen auf der Basis von Kohlenstofffasern als Komponente H) eingesetzt.

Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide oder Feldspat eingesetzt. Besonders bevorzugt werden ferner auch nadelförmige mineralische Füllstoffe als Additiv eingesetzt. Unter nadelförmigen mineralischen Verstärkungsstoffen, auch als Füllstoffe bezeichnet, wird erfindungsgemäß ein mineralischer Füllstoff mit stark ausgeprägtem nadelförmigen Charakter verstanden. Bevorzugt weist das Mineral ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf.

Die mittlere Teilchengröße d50 der erfindungsgemäß als Komponente H) einzusetzenden nadelförmigen Mineralien liegt bevorzugt bei kleiner 20 μm, besonders bevorzugt bei kleiner 15 μm, insbesondere bevorzugt bei kleiner 10 μm.

Alle als Komponente H) einzusetzenden Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe bzw. Glasfasern. Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50% der Partikelmenge liegen (Medianwert) und der d97-Wert diejenige Partikelgröße ist, unterhalb derer 97% der Partikelmenge liegen.

Die Angaben der Teilchengrößenverteilung bzw. der Teilchengrößen beziehen sich im Rahmen der vorliegenden Erfindung auf sogenannte oberflächenbasierte Teilchengrößen, jeweils vor Einarbeitung in die thermoplastische Formmasse. Die Teilchengrößenbestimmung erfolgt durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16. Die zugrunde liegende Norm ist ISO 13317-3.

Die Füll- und Verstärkungsstoffe können einzeln oder als Mischung aus zwei oder mehr unterschiedlichen Füllstoffen und/oder Verstärkungsstoffen eingesetzt werden.

Der als Komponente H) einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Epoxidbasis. Die Vorbehandlung ist jedoch nicht unbedingt erforderlich.

In einer besonders bevorzugten Ausführungsform werden als Komponente H) Glasfasern eingesetzt. Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1mm, Langfasern mit einer Länge im Bereich von 1 bis 50mm und Endlosfasern mit einer Länge L > 50mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200μm liegt.

Erfindungsgemäß bevorzugt werden als Komponente H) geschnittene Langglasfasern mit einer Ausgangslänge im Bereich von 1 bis 50mm, besonders bevorzugt im Bereich von 1 bis 10mm, ganz besonders bevorzugt im Bereich von 2 bis 7mm eingesetzt. Die Ausgangslänge bezeichnet die durchschnittliche Länge der Glasfasern wie sie vor einer Compoundierung der erfindungsgemäßen Zusammensetzung(en) zu einer Formmasse vorliegen. Die als Komponente

H) bevorzugt einzusetzenden Glasfasern können bedingt durch die Verarbeitung, insbesondere Compoundierung, zur Formmasse oder zum Erzeugnis in der Formmasse oder im Erzeugnis einen kleineren d97- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm und 300 μm.

Die Ermittlung der Glasfaserlänge und Glasfaserlängenverteilung erfolgt im Rahmen der vorliegenden Erfindung im Falle verarbeiteter Glasfasern in Analogie zur ISO 22314, welche zunächst eine Veraschung der Proben bei 625°C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_i^n l_i$$

mit $l_i$ = Länge der iten Faser und n = Anzahl der gemessenen Fasern berechnet und in geeigneter Weise als Histogramm dargestellt oder bei einer angenommenen Normalverteilung der gemessenen Glasfaserlängen $l$ mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

bestimmt werden. Dabei sind $l_c$ und $\sigma$ spezielle Kennwerte der Normalverteilung; $l_c$ ist der mittlere Wert und $\sigma$ die Standardabweichung (siehe: M.Schoßig, Schädigungsmechanismen in faserverstärkten Kunststoffen, 1, 2011, Vieweg und Teubner Verlag, Seite 35, ISBN 978-3-8348-1483-8**).** Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die erfindungsgemäß bevorzugt als Komponente H) einzusetzenden Glasfasern [CAS Nr. 65997-17-3)] haben bevorzugt einen Faserdurchmesser im Bereich von 7 bis **18μm,** besonders bevorzugt im Bereich von 9 bis 15μm, der durch wenigstens eine dem Fachmann zur Verfügung stehende Möglichkeit zu ermitteln ist, insbesondere zu ermitteln durch μ-Röntgen-Computertomographie in Analogie zu **"**Quantitative Messung von Faserlängen und -verteilung in faserverstärkten Kunststoffteilen mittels μ-Röntgen-Computertomographie", J.KASTNER, et al. DGZfP-Jahrestagung 2007 - Vortrag 47**.** Die als Komponente H) vorzugsweise einzusetzenden Glasfasern werden bevorzugt als Endlosfasern oder als geschnittene oder gemahlene Glasfasern zugesetzt.

Die als Komponente H) einzusetzenden Füll- und/oder Verstärkungsstoffe, insbesondere Glasfasern, werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (III)

$$(X\text{-}(CH_2)_q)_k\text{-Si-}(O\text{-}C_rH_{2r+1})_{4-k} \qquad \text{(III)}$$

in der die Substituenten folgende Bedeutung haben: X: $NH_2$-, HO-,

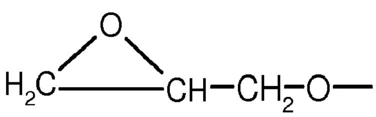

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Amino-propyltrimethoxysilan, Aminobutyltrimethoxysilan, Aminopropyltriethoxysilan, Aminobutyl-triethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf 100 Gew,-% des Füll- bzw. Verstärkungsstoffs, insbesondere die Glasfasern, zur Oberflächenbeschichtung eingesetzt.

**Komponente K)**

Bevorzugte als Komponente K) einzusetzende weitere Additive sind Gleit- und Entformungsmittel, UV-Stabilisatoren, Farbmittel, kettenverlängernd wirkende Additive, Antioxidantien, Weichmacher, Fließhilfsmittel, Thermostabilisatoren, Antioxidantien, Gammastrahlenstabilisatoren, Hydrolysestabilisatoren, Elastomermodifikatoren, Antistatika, Emulgatoren, Nukleierungsmittel, Verarbeitungshilfsmittel, Antitropfmittel und, soweit es der Einsatz erfordert, auch halogenhaltige Flammschutzmittel und deren Synergisten.

Die Additive können alleine, oder in Mischung bzw. in Form von Masterbatchen eingesetzt werden.

Als **Gleit- und Entformungsmittel** werden bevorzugt solche ausgewählt aus der Reihe der langkettigen Fettsäuren, der Salze langkettiger Fettsäuren, der Esterderivate langkettiger Fettsäuren sowie Montanwachse.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere $C_{16}$-$C_{18}$ Fettsäureester des Pentaerythritols [CAS Nr. 68604-44-4] oder [CAS Nr. 85116-93-4]. Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS Nr. 74388-22-0] der Fa. Clariant, Muttenz, Basel ganz besonders bevorzugt ist und Pentaerythritoltetrastearat [CAS Nr. 115-83-3] z. B. erhältlich als Loxiol® P861 der Fa. Emery Oleochemicals GmbH, Düsseldorf, Deutschland insbesondere ganz besonders bevorzugt ist.

Als **UV-Stabilisatoren** werden bevorzugt substituierte Resorcine, Salicylate, Benzotriazole, Triazin-Derivate oder Benzophenone eingesetzt.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid (sofern nicht bereits als Füllstoff eingesetzt), Ultramarinblau, Eisenoxid, Zinksulfid oder Ruß eingesetzt werden.

Für das erfindungsgemäß als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einem Sauerstoffüberschuss in der Gasphase bei der Oxidation des Titantetrachlorids zu Titandioxid von mindestens 2%; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und/oder Al und/oder Zr und/oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in die Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als Farbmittel der Komponente K) einzusetzendes Titandioxid [CAS Nr.

13463-67-7] weist bevorzugt eine mittlere Teilchengröße d50 im Bereich von 90 bis 2000nm, besonders bevorzugt im Bereich von 200 bis 800nm auf. Die mittlere Teilchengröße d50 ist der aus der Teilchengrößenverteilung ermittelte Wert, zu dem 50 Gew.-% der Teilchen einen äquivalenten Kugeldurchmesser kleiner als diesen d50 Wert aufweisen. Die zugrunde liegende Norm ist ISO 13317-3.

Die Angaben der Teilchengrößenverteilung bzw. der mittleren Teilchengröße beim Titandioxid beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Kommerziell erhältliches Titandioxid sind beispielsweise Kronos® 2230, Kronos® 2233, Kronos® 2225 und Kronos® vlp7000 der Fa. Kronos, Dallas, USA.

Erfindungsgemäß wird das als Pigment bevorzugt einzusetzende Titandioxid bevorzugt im Bereich von 0,1 bis 60 Massenanteile, besonders bevorzugt im Bereich von 1 bis 35 Massenanteile, ganz besonders bevorzugt im Bereich von 2 bis 20 Massenanteile eingesetzt, jeweils bezogen auf 100 Massenanteile der Komponente A).

Bevorzugt können als Komponente K) **di- oder mehrfunktionelle verzweigend oder kettenverlängernd wirkende Additive,** enthaltend mindestens zwei und höchstens 15 verzweigend oder kettenverlängernd wirkende funktionelle Gruppen pro Molekül, eingesetzt werden. Als verzweigende bzw. kettenverlängende Additive kommen niedermolekulare oder oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8].

Zur Verzweigung/Kettenverlängerung sind zudem besonders bevorzugt geeignet:

1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.
Poly- bzw. Oligoglycidyl- oder Poly-(ß-methylglycidyl)-ether leiten sich bevorzugt ab von acyclischen Alkoholen, insbesondere Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.
Sie leiten sich aber auch bevorzugt ab von cycloaliphatischen Alkoholen, insbesondere 1,3- Dihydroxycyclohexan, 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne, insbesondere N,N-Bis-(2-hydroxyelhyl)anilin oder p,p'-Bis-(2-hydroxyethyl-amino)-diphenylmethan.
Die Epoxidverbindungen können sich bevorzugt auch von einkernigen Phenolen ableiten, insbesondere von Resorcin oder Hydrochinon, oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Forrnaldehyd, insbesondere Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.

3. Poly- bzw. Oligo-(S-glycidyl)-Verbindungen, insbesondere Di-S-glycidylderivate, die sich von Dithiolen, bevorzugt Ethan-1,2-dithiol oder Bis-(4-mercaptomethylphenyl)-ether, ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001**)** beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl [CAS Nr. 8013-07-8].

5. Mit Glycidylmethacrylat modifizierte Styrol-Acrylat-Polymere, erhältlich durch Polymerisation von Styrol, Glycidylmethacrylat und Acrylsäure und/oder Methacrylsäure.

Bevorzugt als Komponente K) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente K) einzusetzende **Fließhilfsmittel** sind **Copolymerisate** aus mindestens einem $\alpha$-Olefin mit mindestens einem Methacrylsäurester oder Acrylsäureester eines aliphatischen Alkohols. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester. Erfindungsgemäß als Fließhilfsmittel geeignete Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16 kg von mindestens 100 g / 10 min, bevorzugt von mindestens 150 g / 10 min, besonders bevorzugt von mindestens 300g/10min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt. Erfindungsgemäß bevorzugt sind Copolymerisate aus einem $\alpha$-Olefin mit Acrylsäureester eines aliphatischen Alkohols. Erfindungsge,äß besonders bevorzugt ist ein Copolymerisat allein aus Ethen und Acrylsäure-(2-ethyl)-hexylester.

Bevorzugt als Komponente K) einzusetzende **Elastomermodifikatoren** umfassen u.a. ein oder mehrere Pfropfpolymerisate von

K.1 5 bis 95 Gew.-%, vorzugsweise 30 bis 90 Gew.-%, wenigstens eines Vinylmonomeren auf

K.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C.

Die Pfropfgrundlage K.2 hat im allgemeinen eine mittlere Teilchengröße (d50-Wert) im Bereich von 0,05 bis 10 $\mu$m, vorzugsweise im Bereich von 0,1 bis 5 $\mu$m, besonders bevorzugt im Bereich von 0,2 bis 1 $\mu$m.

Monomere K.1 sind vorzugsweise Gemische aus

K.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere Methylmethacrylat, Ethylmethacrylat und

K.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid.

Bevorzugte Monomere K.1.1 sind ausgewählt aus mindestens einem der Monomere Styrol, $\alpha$-Methylstyrol und Methylmethacrylat, bevorzugte Monomere K.1.2 sind ausgewählt aus mindestens einem der Monomere Acrylnitril, Maleinsäureanhydrid, Glycidylmethacrylat und Methylmethacrylat.

Besonders bevorzugte Monomere sind K.1.1 Styrol und K.1.2 Acrylnitril.

Für die in den Elastomermodifikatoren einzusetzenden Pfropfpolymerisate geeignete Pfropfgrundlagen K.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen K.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß K.1.1 und K.1.2, mit der Maßgabe, dass die Glasübergangstemperatur der Komponente K.2 bei <10°C, vorzugsweise bei <0°C, besonders bevorzugt bei <-10°C liegt.

Besonders bevorzugte Propfgrundlagen K.2 sind ABS-Polymerisate (Emulsions-, Masse-und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 280 ff**.** beschrieben sind..

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch RedoxInitiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen K.2 die vorzugsweise Polymerisate aus Acrylsäurealkylestern, gegebenenfalls mit bis zu 40 Gew.-%, bezogen auf K.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Weitere bevorzugt geeignete Pfropfgrundlagen gemäß K.2 sind Silikonkautschuke mit pfropfaktiven Stellen, wie sie in DE-A 3 704 657**,** DE-A 3 704 655 **,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z. B. Metablen® SRK200 eingesetzt werden. Unter solchen mit Methylmethacrylat als Schale können z. B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf 100 Gew.-% derPfropfgrundlage K.2.

Bei cyclischen vernetzenden Monomeren mit mindestens 3 ethylenisch ungesättigten Gruppen ist es vorteilhaft, die Menge auf unter 1 Gew.-% bezogen auf 100 Gew.-% der Pfropfgrundlage K.2 zu beschränken.

Bevorzugte "andere" polymerisierbare, ethylenisch ungesättigte Monomere, die neben den Acrylsäureestern gegebenenfalls zur Herstellung der Pfropfgrundlage K.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage K.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM-und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente K) bevorzugt einzusetzende **Thermostabilisatoren** sind ausgewählt aus der Gruppe der

schwefelhaltigen Stabilisatoren, insbesondere Sulfide, Dialkylthiocarbamaten oder Thiodipropionsäuren, außerdem solche ausgewählt aus der Gruppe der Eisensalze und der Kupfersalze, hier insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS Nr. 35074-77-2] (Irganox® 259 der Fa. BASF SE, Ludwigshafen, Deutschland), Pentaerythril-tetrakis-[3-(3,5-di-tert.-butyl-4-hydroxyphenyl)-propionat] [CAS Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird und Tetrakis(2,4-di-tert-butylphenyl)-1,1-biphenyl-4,4'-diylbisphosphonit [CAS Nr. 38613-77-3] eingesetzt, das z. B. als Hostanox® P-EPQ von der Fa. Clariant International Ltd., Muttenz, Schweiz bezogen werden kann.

Auch können als Komponente K) zum Schutz vor basischer Hydrolyse anorganische Phosphatsalze aus der Gruppe der Metallhydrogenphosphate, der Metalldihydrogenphosphate, der Metalldihydrogenpyrophosphate und/oder der Metallpyrophosphate eingesetzt, wobei Metall hier für Natrium, Kalium, Magnesium, Calcium, Zink, Kupfer und/oder Aluminium steht. Dabei sind erfindungsgemäß auch die entsprechenden Hydrate mit umfasst. Vorzugsweise werden dabei solche anorganischen Phosphatsalze eingesetzt, die einen pH-Wert im Bereich von 2 bis 6 aufweisen, besonders bevorzugt im Bereich von 2 bis 4 aufweisen, wobei sich die Angaben des pH-Wertes hier auf wässriges Medium bei 20°C und einer Konzentration von 1g pro Liter beziehen. Aus der Gruppe der Metalldihydrogenpyrophosphate und der Metallpyrophosphate werden bevorzugt Natriumdihydrogenpyrophosphat [CAS Nr. 7758-16-9], Calciumdihydrogenpyrophosphat [CAS Nr. 14866-19-4], Magnesiumpyrophosphat [CAS Nr. 13446-24-7], Calciumpyrophosphat [CAS Nr. 7790-76-3] und Zinkpyrophosphat [CAS Nr. 7446-26-6] eingesetzt. Aus der Gruppe der Metallhydrogenphosphate werden bevorzugt Calciumhydrogenphosphat [CAS Nr. 7757-93-9], Calciumhydrogenphosphatdihydrat [CAS Nr.7789-77-7], Magnesiumhydrogenphosphat [CAS Nr. 7757-86-0] und Zinkhydrogenphosphat [CAS Nr.7664-38-2] eingesetzt. Aus der dabei insbesondere bevorzugt einzusetzenden Gruppe der Metalldihydrogenphosphate werden bevorzugt Aluminiumdihydrogenphosphat [CAS Nr. 13530-50-2], Magnesium-bis(dihydrogenphosphate) [CAS Nr.13092-66-5], Calcium-bis(dihydrogenphosphat) [CAS Nr. 7758-23-8], Zink-bis(dihydrogenphosphat) [CAS Nr.13598-37-3] und Zink-bis(dihydrogenphosphat)-dihydrat [CAS Nr. 13986-21-5] eingesetzt.

Als Komponente K) bevorzugt einzusetzende **Nukleierungsmittel** sind Natrium- oder Calciumphenylphosphinat, Aluminiumoxid, Siliziumdioxid oder Talkum [CAS No.14807-96-6], wobei Talkum bevorzugt ist. Dabei wird besonders bevorzugt mikrokristallines Talkum eingesetzt. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum [CAS Nr. 14807-96-6] kann beispielsweise als Mistron® R10 von Imerys Talc Group, Toulouse, Frankreich (Rio Tinto Group) bezogen werden.

Als Komponente K) bevorzugt einzusetzende **Antitropfmittel** sind insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden. Ein insbesondere bevorzugt geeignetes Beispiel für Tetrafluorethylen-Styrolacrylnitril-Harze ist z. B. Cycolac® INP 449 [CAS Nr. 1427364-85-9] der Fa. Sabic Corp., Riad, Saudi Arabien; ein insbesondere bevorzugt geeignetes Beispiel für Tetrafluorethylen-AcrylatHarze ist z. B. Metablen A3800 [CAS Nr. 639808-21-2] der Fa. Mitsubishi Rayon Co., Ltd., Tokio, Japan. Antitropfmittel enthaltend Tetrafluorethylenpolymerisate werden erfindungsgemäß als Komponente K) bevorzugt in Mengen im Bereich von 0,01 bis 5 Massenanteilen, besonders bevorzugt im Bereich von 0,05 bis 2 Massenanteilen jeweils bezogen auf 100 Massenanteile der Komponente A) eingesetzt.

Sofern es der Einsatz erfordert können als Komponente K) auch **halogenhaltige Flammschutzmittel** eingesetzt werden. Hierzu zählen handelsübliche organische Halogenverbindungen mit oder ohne Synergisten. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol und bromierte Polyphenylenether genannt

Als Synergisten sind bevorzugt Antimonverbindungen, insbesondere Antimontrioxid und Antimonpentoxid, Zinkverbindungen, Zinnverbindungen, insbesondere Zinkstannat und Borate, insbesondere Zinkborate geeignet.

In bevorzugter Ausführungsform betrifft die vorliegende Erfindung Zusammensetzungen und daraus herzustellende Formmassen sowie Erzeugnisse enthaltend A) Polybutylenterepthalat, B) Polyethylenterepthalat, C) Aluminium-tris(diethylphosphinat), D) Melem und E) Melaminpolyphosphat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Polyethylenterepthalat, C) Aluminium-tris(diethylphosphinat), D) Melem, E) Melaminpolyphosphat und F) cyclisches Phenoxyphosphazen.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Polyethylenterepthalat, C) Aluminium-tris(diethylphosphinat), D) Melem, E) Melaminpolyphosphat und F) cyclisches Phenoxyphosphazen und G) Bariumsulfat.

In bevorzugter Ausführungsform betrifft die vorliegende Erfindung zudem Zusammensetzungen und daraus herzustellende Formmassen sowie Erzeugnisse enthaltend A) Polybutylenterepthalat, B) Polyethylenterepthalat, C) Aluminium-tris(diethylphosphinat), D) Melem, E) Melaminpolyphosphat und F) cyclisches Phenoxyphosphazen , G) Bariumsulfat und H) Glasfasern, vorzugsweise Glasfasern aus E-Glas, besonders bevorzugt Glasfasern mit einem mittleren Faserdurchmesser im Bereich 10 bis 12μm und/oder einer mittleren Faserlänge von 4,5mm.

**Verwendung**

Die vorliegende Erfindung betrifft aber auch die Verwendung der erfindungsgemäßen Zusammensetzungen, insbesondere in Form von Formmassen, zur Herstellung flammwidriger Erzeugnisse, bevorzugt elektrischer oder elektronischer Baugruppen und Komponenten.

Die vorliegende Erfindung betrifft aber auch die Verwendung der erfindungsgemäßen Zusammensetzungen, insbesondere mit hoher thermischer Stabilität gegen Umesterung sowie hoher Flammwidrigkeit gemäß Prüfungen nach UL94 und IEC 60695-2-13, zur Herstellung von Erzeugnissen der Elektro- oder Elektronikindustrie, insbesondere Erzeugnissen der Elektro- oder Elektronikindustrie in Haushaltsgeräten, wobei als Polyester neben Polyethylenterepthalat wenigstens ein weiteres Polyalkylenterephthalat und/oder ein Polycycloalkylenterephthalat, insbesondere wenigstens Polybutylenterephthalat eingesetzt wird.

**Verfahren**

Die vorliegende Erfindung betrifft aber auch ein Verfahren zur Herstellung von Erzeugnissen, bevorzugt für die Elektro- oder Elektronikindustrie, besonders bevorzugt elektronischer oder elektrischer Baugruppen und Komponenten, indem man erfindungsgemäße Zusammensetzungen zu einer Formmasse vermischt. Zusätzlich können diese Formmassen in Form eines Strangs ausgetragen, bis zur Granulierfähigkeit abkühlt und granuliert werden, bevor sie als Matrixmaterial einem Spritzguss oder einer Extrusion, bevorzugt einem Spritzguss, unterzogen werden.

Die Erfindung betrifft deshalb ein Verfahren zur Herstellung von Erzeugnissen worin man erfindungsgemäße Zusammensetzungen zu Formmassen vermischt, diese in Form eines Strangs austrägt, bis zur Granulierfähigkeit abkühlt und granuliert und sie als Matrixmaterial einem Spritzguss oder einer Extrusion unterzieht.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es als Matrixmaterial dem Spritzguss oder einem Extrusionsverfahren zwecks Herstellung erfindungsgemäßer Erzeugnisse unterzogen wird.

Die vorliegende Erfindung betrifft aber auch ein Verfahren zur Verbesserung der Kriechstromfestigkeit Polyester basierter Erzeugnisse, indem man erfindungsgemäße Zusammensetzungen in Form von Formmassen als Matrixmaterial mittels Spritzguss oder Extrusion verarbeitet.

Die Verfahren des Spritzgusses sowie der Extrusion thermoplastischer Formmassen sind dem Fachmann bekannt.

Erfindungsgemäße Verfahren zur Herstellung von Polyester basierten Erzeugnissen durch Extrusion oder Spritzguss arbeiten bei Schmelzetemperaturen im Bereich von 240 bis 330°C, bevorzugt im Bereich von 260 bis 300°C, besonders bevorzugt im Bereich von 270 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch

erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere kriechstromfeste Erzeugnisse, erhältlich durch Extrusion, bevorzugt Profil-Extrusion, oder Spritzguss der aus den erfindungsgemäßen Zusammensetzungen erhältlichen Formmassen.

## Beispiele

Zum Nachweis der erfindungsgemäß beschriebenen Verbesserungen bei Kriechstromfestigkeit und Mechanik wurden zunächst durch Compoundierung entsprechende Polyester Formmassen angefertigt. Die einzelnen Komponenten wurden hierzu in einem Zweiwellenextruder (ZSK 26 Mega Compounder der Fa. Coperion Werner & Pfleiderer (Stuttgart, Deutschland)) bei Temperaturen im Bereich von 260 bis 300°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in **Tabelle** 1 aufgeführten Untersuchungen wurden auf einer Spritzgießmaschine des Typs Arburg 320-210-500 bei einer Massetemperatur von 260°C und einer Werkzeugtemperatur von 80°C verspritzt:

- Prüfkörper für die Glühdrahtprüfung in Anlehnung an DIN EN 60695-2-13

Die Glühdrahtbeständigkeit wurde anhand der Glühdrahtentzündlichkeitsprüfung GWIT (Glow-Wire-Ignition-Temperature) nach DIN EN 60695-2-13 bestimmt. Bei der GWIT-Prüfung wird die Glühdrahtentzündungstemperatur angegeben, die 25K (bzw. 30K bei Temperaturen im Bereich von 900°C bis 960°C) höher ist, als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit ≥ 5sec. Für die Prüfungen wurden Rundplatten mit einem Durchmesser von 80mm und einer Dicke von 0,75mm verwendet. Neben der Glühdrahtentzündlichkeitstemperatur wird zusätzlich die Brennzeit der Flamme bei einer Glühdrahttemperatur von 800°C angeben. Eine Brennzeit von 0 Sekunden bedeutet dabei, dass sich die Probe gar nicht entzündet hat, d. h. auch keine Flamme mit einer Brennzeit größer als 0 Sekunden und kleiner als 5 Sekunden gezeigt hat.

Die thermische Stabilität hinsichtlich Umesterung von Komponente A) und Komponente B) wurde am Granulat mit Hilfe der DSC-Methode (Dynamische Differenzkalorimetrie [https://de.wikipedia.org/wiki/Dynamische_Differenzkalorimetrie]) an einem Gerät des Typs Mettler DSC 822e der Fa. Mettler Toledo, Greifensee, Schweiz bestimmt. Dazu wurden 10 (±2)mg der jeweiligen, zu einem Compound verarbeiteten Zusammensetzung eingewogen, dann unter Stickstoff mit +20K/min von 0°C auf 280°C erhitzt ["1. Aufheizung"], anschließend mit -10K/min wieder von 280°C auf 0°C abgekühlt und schließlich wieder mit +20K/min von 0°C auf 280°C erhitzt "2.Aufheizung"]. Gemäß der vorangegangenen Erläuterung kann die Verschiebung der Schmelzpeaks zwischen 1. Aufheizung und 2. Aufheizung als Maß für die Umesterung und damit als Maß für die thermische Stabilität der Probe betrachtet werden.

In den Beispielen wird daher die Differenz der Schmelztemperatur aus 1. Aufheizung und 2. Aufheizung, jeweils bestimmt an dem Schmelzepeak des höherschmelzenden Basisharzes, als Maß für die Umesterung der Polyesterkomponenten betrachtet, wobei eine Verschiebung kleiner oder gleich 10°C als geringe Neigung zur Umesterung steht und eine Verschiebung um mehr 10°C für ein hohes Maß an Umesterung und damit für eine geringe thermische Stabilität steht.

**EDUKTE**

**Komponente A):** Lineares Polybutylenterephthalat (Pocan® B 1300, Handelsprodukt der Lanxess Deutschland GmbH, Leverkusen, Deutschland) mit einer Intrinsischen Viskosität von 93 $cm^3/g$ (gemessen in Phenol : 1,2-Dichlorbenzol = 1:1 bei 25°C). Der Schmelzpunkt bestimmt als Schmelzpeak der 1. Aufheizung nach der o.g. DSC-Methode lag bei 222°C.

**Komponente B):** PET, Lighter® C93 von Equipolymers Global GmbH (Horgen, Schweiz); PET-Copolymer mit Isophthalsäure-Gehalt von ca. 1 - 3%. Der Schmelzpunkt bestimmt als Schmelzpeak der 1. Aufheizung nach der o.g. DSC-Methode lag bei 252°C.

**Komponente C):** Aluminium-tris(diethylphosphinat), [CAS Nr. 225789-38-8] (Exolit® OP1230 der Fa. Clariant SE, Muttenz, Schweiz)

**Komponente D):** Melem [CAS Nr. 1502-47-2] mit einem Melamingehalt <1% (Delacal NFR der Fa. Delamin Ltd., Derby, UK)

**Komponente E)** Melaminpolyphosphat [CAS Nr. 218768-84-4 (Melapur® 200/70 der Fa. BASF, Ludwigshafen, Deutschland)

**Komponente F)** Phenoxyphosphazene (Rabitle® FP110 [CAS Nr. 1203646-63-2] der Fa. Fushimi Pharmaceutical Co. Ltd, Kagawa

**Komponente G)** Bariumsulfat [CAS Nr.7727-43-7] (BLANC FIXE Super F der Fa. Sachtleben Chemie GmbH, Duisburg, Deutschland)

**Komponente H):** Mit silanhaltigen Verbindungen beschlichtete Glasfaser mit einem Durchmesser von 10 µm (CS 7967, Handelsprodukt der Lanxess N.V., Antwerpen, Belgien)

Als weitere Additive der **Komponente K)** wurden in den Beispielen als Komponente K/1) die folgenden, für die Verwendung in flammgeschützten thermoplastischen Polyestern gebräuchlichen Komponenten eingesetzt:
Entformungsmittel: Pentaerythrit-tetrastearat (PETS) [CAS Nr. 115-83-3] (Loxiol® VPG 861, Fa. Cognis Deutschland GmbH, Düsseldorf, Deutschland)
Thermostabilisator: Tetrakis(2,4-di-tert-butylphenyl)-1,1-biphenyl-4,4'-diylbisphosphonit [CAS Nr. 38613-77-3] (Hostanox® P-EPQ von der Fa. Clariant International Ltd., Muttenz, Schweiz)
Antidripping-Additiv: Polytetrafluorethylen, [CAS Nr.9002-84-0] (Dyneon® PA 5932 der Fa. Dyneon GmbH & Co KG, Neuss, Deutschland)
Nukleierungsmittel: Talkum [CAS Nr. 14807-96-6]
Die verwendeten weiteren Additive (Komponente K/1)) stimmen für entsprechende Vergleichsbeispiele und Beispiele jeweils in Art und Menge überein.

**Tabelle** 1

| | | Bsp. 1 | Vgl. 1 | Bsp. 2 | Vgl. 2 | Vgl. 3 |
|---|---|---|---|---|---|---|
| Komponente A/1 | [Massenanteile] | 100,0 | 100,0 | 100,0 | 100,0 | 100,0 |
| Komponente B/1 | [Massenanteile] | 83,2 | 83,2 | 87,2 | 87,2 | 87,2 |
| Komponente C/1 | [Massenanteile] | 33,6 | 38,7 | 32,4 | 39,4 | 48,2 |
| Komponente D/1 | [Massenanteile] | 21,7 | 21,7 | 10,5 | 0,0 | 0,0 |
| Komponente E/1 | [Massenanteile] | 9,4 | 0,0 | 9,1 | 10,8 | 0,0 |
| Komponente F/1 | [Massenanteile] | 7,6 | 11,9 | 7,3 | 9,1 | 11,2 |
| Komponente G/1 | [Massenanteile] | 7,2 | 7,2 | 7,0 | 7,0 | 7,0 |
| Komponente H/1 | [Massenanteile] | 90,4 | 90,4 | 87,2 | 87,2 | 87,2 |
| Komponente I/1 | [Massenanteile] | 8,5 | 8,5 | 8,2 | 8,2 | 8,2 |
| GWIT [0,75mm] | [°C] | ≥ 825 | ≥ 825 | ≥ 825 | 800 | 775 |
| Brennzeit bei 800°C Glühdrahttemperatur [0,75mm Platte] | [s] | 0 | 0 | 0 | > 5 | > 5 |
| DSC: Schmelzpunkt 1. Aufheizung | [°C] | 252 | 245 | 252 | 251 | 251 |
| DSC: Schmelzpunkt 2. Aufheizung | [°C] | 245 | 228 | 251 | 243 | 238 |
| DSC: Schmelzpunktdifferenz: 1. Aufheizung - 2. Aufheizung | [°C] | < 10 | > 10 | < 10 | <10 | >10 |

Die Beispiele 1 und 2 zeigen, dass ein GWIT vom mindestens 825°C bei gleichzeitig hoher thermischer Stabilität bezüglich Umesterung nur bei Verwendung einer erfindungsgemäßen Kombination enthaltend Komponente D) und Komponente E) erreicht werden kann. Fehlt mindestens eine der beiden Komponenten D) und/oder E) so erhält man verstärkte Umesterung der Komponenten A) und B) miteinander (Vgl. 1 und Vgl. 2) und/oder eine erhöhte Entzündlichkeit im Glühdrahttest nach IEC60695-2-13 (Vgl. 2 und Vgl. 3).
Zur besseren Vergleichbarkeit der Glühdrahtentzündlichkeit wurde die Summe der Anteile der Komponenten C), D), E) und F) in Bsp. 1 und Vgl. 1 bzw. Bsp. 2, Vgl.2 und Vgl. 3 jeweils konstant gehalten.

## Patentansprüche

**1.** Zusammensetzungen, Formmassen und Erzeugnisse enthaltend

A) wenigstens ein Polyalkylenterephthalat verschieden von Polyethylenterephthalat oder Polycycloalkylenterephthalat,
B) Polyethylenterephthalat,

C) wenigstens ein organisches Phosphinsäuresalz der Formel (I) und/oder wenigstens ein organisches Diphosphinsäuresalz der Formel (II) und/oder deren Polymere,

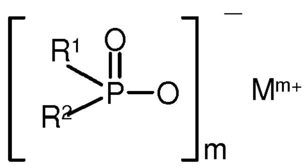 (I) 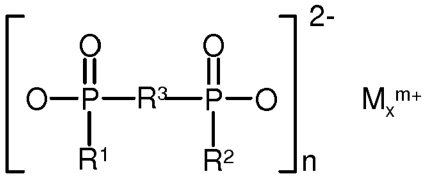 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$- Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl im Bereich von 1 bis 4 steht;
n für eine ganze Zahl im Bereich von 1 bis 3 steht, und
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist,
D) wenigstens ein kondensiertes Melamin-Derivat und
E) wenigstens ein Umsetzungsprodukt aus einem Melaminderivat mit Phosphorsäuren oder kondensierten Phosphorsäuren.

2. Zusammensetzungen, Formmassen und Erzeugnisse gemäß Anspruch 1, **dadurch gekennzeichnet, dass** bezogen auf 100 Massenanteile der Komponente A)
25 bis 120 Massenanteile der Komponente B),
20 bis 80 Massenanteile der Komponente C),
2 bis 40 Massenanteile der Komponente D) und
2 - 30 Massenanteile der Komponente E) eingesetzt werden.

3. Zusammensetzungen, Formmassen und Erzeugnisse gemäß einem der Ansprüche 1 oder 2, **dadurch gekennzeichnet, dass** zusätzlich zu den Komponenten A) bis E) noch F) wenigstens ein weiteres Flammschutzmittel, verschieden von den Komponenten C), D) und E), vorzugsweise in Mengen im Bereich von 2 bis 50 Massenanteilen, bezogen auf 100 Massenanteile der Komponente A), eingesetzt wird.

4. Zusammensetzungen, Formmassen und Erzeugnisse gemäß einem der Ansprüche 1 bis 3, **dadurch gekennzeichnet, dass** zusätzlich zu den Komponenten A) bis F) oder anstelle von F) noch G) wenigstens ein Metallsulfat, vorzugsweise in Mengen im Bereich von 1 bis 40 Massenanteilen, bezogen auf 100 Massenanteile der Komponente A) eingesetzt wird.

5. Zusammensetzungen, Formmassen und Erzeugnisse gemäß einem der Ansprüche 1 bis 4, **dadurch gekennzeichnet, dass** zusätzlich zu den Komponenten A) bis G) oder anstelle von F) und/oder G) noch H) wenigstens ein von den Komponenten A) bis G) verschiedener Füllstoff oder Verstärkungsstoff, vorzugsweise in Mengen im Bereich von 0,1 bis 300 Massenanteilen, bezogen auf 100 Massenanteile der Komponente A), eingesetzt wird.

6. Zusammensetzungen, Formmassen und Erzeugnisse gemäß einem der Ansprüche 1 bis 5, **dadurch gekennzeichnet, dass** als Komponente D) Melam, Melem oder Melon sowie Mischungen daraus, eingesetzt werden.

7. Zusammensetzungen, Formmassen und Erzeugnisse gemäß einem der Ansprüche 1 bis 6, **dadurch gekennzeichnet, dass** als Komponente E) Dimelaminphosphat, Dimelaminpyrophosphat, Melaminphosphat, Melaminpyrophosphat, Melaminpolyphosphat, Melampolyphosphat, Melonpolyphosphat und Melempolyphosphat eingesetzt werden.

8. Zusammensetzungen, Formmassen und Erzeugnisse gemäß einem der Ansprüche 3 bis 7, **dadurch gekennzeichnet, dass** die als Komponente F) einzusetzenden weiteren Flammschutzmittel halogenfrei sind.

9. Zusammensetzungen, Formmassen und Erzeugnisse gemäß einem der Ansprüche 4 bis 8, **dadurch gekennzeichnet, dass** als Komponene G) wird wenigstens ein Metallsulfat eingesetzt wird, wobei das Metall aus Magnesium, Calcium, Barium und Zink ausgewählt wird, vorzugsweise Barium.

10. Zusammensetzungen, Formmassen und Erzeugnisse gemäß einem der Ansprüche 5 bis 9, **dadurch gekennzeichnet, dass** als Komponente H) wenigstens ein Füll-oder Verstärkungsstoff aus der Gruppe Glimmer, Silikat, Quarz, insbesondere. Quarzmehl, Titandioxid, Wollastonit, Nephelinsyenit, Kaolin, amorphe Kieselsäuren, Magnesiumcarbonat, Kreide, Feldspat, Glasfasern, Glaskugeln, Glasmehl und/oder faserförmige Füllstoffe und/oder Verstärkungsstoffen auf der Basis von Kohlenstofffasern eingesetzt wird.

11. Zusammensetzungen, Formmassen und Erzeugnissegemäß Anspruch 10, **dadurch gekennzeichnet, dass** geschnittene Langglasfasern mit einer Ausgangslänge im Bereich von 1 bis 50mm eingesetzt werden.

12. Zusammensetzungen, Formmassen und Erzeugnisse gemäß einem der Ansprüche 1 bis 11, **dadurch gekennzeichnet, dass** A) für Polybutylenterepthalat, B) für Polyethylenterepthalat, C) für Aluminium-tris(diethylphosphinat), D) für Melem und E) für Melaminpolyphosphat steht.

13. Zusammensetzungen, Formmassen und Erzeugnisse gemäß einem der Ansprüche 3 bis 11, **dadurch gekennzeichnet, dass** A) für Polybutylenterepthalat, B) für Polyethylenterepthalat, C) für Aluminium-tris(diethylphosphinat), D) für Melem, E) für Melaminpolyphosphat und F) für cyclisches Phenoxyphosphazen steht.

14. Zusammensetzungen, Formmassen und Erzeugnisse gemäß einem der Ansprüche 4 bis 11, **dadurch gekennzeichnet, dass** A) für Polybutylenterepthalat, B) für Polyethylenterepthalat, C) für Aluminium-tris(diethylphosphinat), D) für Melem, E) für Melaminpolyphosphat und F) für cyclisches Phenoxyphosphazen und G) für Bariumsulfat steht.

15. Verfahren zur Herstellung von Erzeugnissen, **dadurch gekennzeichnet, dass** man Zusammensetzungen gemäß einem der Ansprüche 1 bis 14 zu Formmassen vermischt, diese in Form eines Strangs austrägt, bis zur Granulierfähigkeit abkühlt und granuliert und sie als Matrixmaterial einem Spritzguss oder einer Extrusion unterzieht.

16. Verwendung der Zusammensetzungen oder Formmassen gemäß einem der Ansprüche 1 bis 14 zur Herstellung flammwidriger Erzeugnisse, bevorzugt elektrischer oder elektronischer Baugruppen und Komponenten.

Europäisches Patentamt
European Patent Office
Office européen des brevets

# EUROPÄISCHER RECHERCHENBERICHT

Nummer der Anmeldung
EP 16 18 6756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DATABASE WPI<br>Week 201050<br>Thomson Scientific, London, GB;<br>AN 2010-J13977<br>XP002766772,<br>-& JP 2010 155900 A (MITSUBISHI ENG PLASTICS KK) 15. Juli 2010 (2010-07-15)<br>* Zusammenfassung *<br>* Absatz [0062]; Ansprüche 5,9; Beispiele 5,6; Tabelle 1 *<br>----- | 1-16 | INV.<br>C08L67/02<br>C08K5/34922<br>C08K5/5313 |
| A | WO 2010/112375 A1 (DSM IP ASSETS BV [NL]; CREVECOEUR JEROEN JOOST [NL]; ZWARTKRUIS THEODO) 7. Oktober 2010 (2010-10-07)<br>* Seite 4, Zeile 9; Ansprüche 1-10; Beispiele 1, 2 *<br>----- | 1-16 | |

RECHERCHIERTE SACHGEBIETE (IPC)
C08L
C08K

Der vorliegende Recherchenbericht wurde für alle Patentansprüche erstellt

1

| Recherchenort | Abschlußdatum der Recherche | Prüfer |
|---|---|---|
| München | 6. Februar 2017 | Scheid, Günther |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 16 18 6756

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2017

| Im Recherchenbericht angeführtes Patentdokument | Datum der Veröffentlichung | Mitglied(er) der Patentfamilie | Datum der Veröffentlichung |
|---|---|---|---|
| JP 2010155900 A | 15-07-2010 | JP 5203921 B2 | 05-06-2013 |
| | | JP 2010155900 A | 15-07-2010 |
| WO 2010112375 A1 | 07-10-2010 | CN 102369241 A | 07-03-2012 |
| | | EP 2414454 A1 | 08-02-2012 |
| | | JP 2012522083 A | 20-09-2012 |
| | | US 2012101197 A1 | 26-04-2012 |
| | | WO 2010112375 A1 | 07-10-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2927279 A1
- EP 1945708 B1
- DE 10324098 A1
- WO 2004009315 A1
- WO 2007116022 A2
- WO 9739053 A
- WO 9839306 A
- WO 2012025362 A1
- EP 2609173 A1
- EP 728811 A
- DE 1961668 A
- WO 9740092 A
- WO 2008023074 A1
- DE 2035390 A
- DE 2248242 A
- US 4937285 A
- DE 3704657 A
- DE 3704655 A
- DE 3631540 A
- DE 3631539 A


### In der Beschreibung aufgeführte Nicht-Patentliteratur


- Test for Flammability of Plastic Materials for Parts in Devices and Appliances. Underwriters Laboratories Inc, 1998, 14-18
- Handbook of Thermoplastics. CRC Press Inc, 2015, 331
- Kunststoff-Handbuch. KARL HANSER VERLAG, 1973, vol. VIII, 695 FF
- *CHEMICAL ABSTRACTS,* 24968-12-5
- *CHEMICAL ABSTRACTS,* 3576-88-3
- *CHEMICAL ABSTRACTS,* 1502-47-2
- *CHEMICAL ABSTRACTS,* 32518-77-7
- *CHEMICAL ABSTRACTS,* 1078142-02-5
- *CHEMICAL ABSTRACTS,* 68664-06-2
- *CHEMICAL ABSTRACTS,* 1184-10-7
- *CHEMICAL ABSTRACTS,* 1203646-63-2
- *CHEMICAL ABSTRACTS,* 25134-01-4
- *CHEMICAL ABSTRACTS,* 7727-43-7
- Chemie Ingenieur Technik. Wiley-VCH Verlags GmbH, Marz 2000, vol. 72, 273-276
- **C.M. KECK.** Moderne Pharmazeutische Technologie. Freie Universität Berlin, 2009
- QUANTACHROME PARTIKELWELT. Juni 2007, vol. 6, 1-16
- **M.SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- Quantitative Messung von Faserlängen und -verteilung in faserverstärkten Kunststoffteilen mittels μ-Röntgen-Computertomographie. **J.KASTNER et al.** DGZfP-Jahrestagung. 2007
- *CHEMICAL ABSTRACTS,* 1592-23-0
- *CHEMICAL ABSTRACTS,* 74388-22-0
- *CHEMICAL ABSTRACTS,* 115-83-3
- *QUANTACHROME PARTIKELWELT,* Juni 2007, (6), 1-16
- *CHEMICAL ABSTRACTS,* 98460-24-3
- *CHEMICAL ABSTRACTS,* 8013-07-8
- **SMITH ; MARCH.** March's Advanced Organic Chemistry. Wiley-Interscience, 2001
- **ULLMANN.** Enzyklopädie der Technischen Chemie. 1980, vol. 19, 280 ff
- *CHEMICAL ABSTRACTS,* 35074-77-2
- *CHEMICAL ABSTRACTS,* 6683-19-8
- *CHEMICAL ABSTRACTS,* 90498-90-1
- *CHEMICAL ABSTRACTS,* 154862-43-8
- *CHEMICAL ABSTRACTS,* 38613-77-3
- *CHEMICAL ABSTRACTS,* 7758-16-9
- *CHEMICAL ABSTRACTS,* 14866-19-4
- *CHEMICAL ABSTRACTS,* 13446-24-7
- *CHEMICAL ABSTRACTS,* 7790-76-3
- *CHEMICAL ABSTRACTS,* 7446-26-6
- *CHEMICAL ABSTRACTS,* 7757-93-9
- *CHEMICAL ABSTRACTS,* 7789-77-7
- *CHEMICAL ABSTRACTS,* 7757-86-0
- *CHEMICAL ABSTRACTS,* 7664-38-2
- *CHEMICAL ABSTRACTS,* 13530-50-2
- *CHEMICAL ABSTRACTS,* 13092-66-5
- *CHEMICAL ABSTRACTS,* 7758-23-8
- *CHEMICAL ABSTRACTS,* 13598-37-3
- *CHEMICAL ABSTRACTS,* 13986-21-5
- *CHEMICAL ABSTRACTS,* 14807-96-6
- *CHEMICAL ABSTRACTS,* 1427364-85-9
- *CHEMICAL ABSTRACTS,* 639808-21-2
- **THIELEN ; HARTWIG ; GUST.** Blasformen von Kunststoffhohlkörpern. Carl Hanser Verlag, 2006, 127-129

- *CHEMICAL ABSTRACTS,* 225789-38-8
- *CHEMICAL ABSTRACTS,* 218768-84-4
- *CHEMICAL ABSTRACTS,* 9002-84-0